# DEMANDE DE BREVET EUROPEEN

(11) **EP 3 603 412 A1**
(43) Date de publication de la demande: **05.02.2020**
(21) Numéro de dépôt: 19189924.4
(22) Date de dépôt: 02.08.2019
(51) Int. Cl.: A23L 3/015, A23C 11/10, A23L 2/02, A23L 19/10, A23L 2/42

(54) **BOISSON À BASE DE SOUCHET ET MÉTHODES POUR LA PRÉPARATION ET L'AUGMENTATION DE LA STABILITÉ DE LA BOISSON**

(30) Priorité: 03.08.2018 EP 18187314; 16.10.2018 CH 12592018
(71) Demandeur: Pure Natural Food SA, 1040 Echallens (CH)
(72) Inventeur: BOCQUEL, Dimitri, 1941 Vollèges (CH)
(74) Mandataire: Omnis-IP

(57) **Abrégé**

La présente invention concerne une méthode pour la préparation d'une boisson à base de souchet et une méthode pour augmenter la stabilité de la boisson à base de souchet. L'invention concerne également une méthode pour diminuer l'ampleur de la séparation de phases d'une boisson à base de souchet suite à un traitement par pascalisation. Les méthodes comprennent le traitement de la boisson de façon qu'au moins une partie des microparticules en suspension dans la boisson disparaît, de préférence une partie des microparticules d'une taille inférieure à 70 micromètres ou d'une taille entre 10-100 micromètres. L'invention concerne également la boisson obtenue par ces méthodes. Selon un mode de réalisation, l'invention comprend l'élimination d'une partie de la matière sèche de la boisson avant de la traiter par pascalisation.

## Description

### Domaine technique

La présente invention concerne le domaine des boissons végétales, en particulier les boissons à base de souchet. L'invention concerne plus particulièrement une boisson à base de souchet ayant des caractéristiques particulières, une méthode pour la préparation d'une boisson à base de souchet, et une méthode pour l'augmentation de la stabilité de cette boisson.

### Etat de la technique et problèmes à l'origine de l'invention

Le lait animal constitue un élément central dans l'alimentation d'un grand nombre de sociétés humaines. Dans la société occidentale, par exemple en Suisse, c'est notamment le lait de vache qui est produit et consommé le plus. Le lait est utilisé pour fabriquer des aliments, tels que les fromages, yoghourts, crèmes glacées, laits frappés qui eux sont consommés directement ou utilisés dans la fabrication de mets, par exemple dans le cas des fromages. Le lait est également utilisé comme ingrédient de nombreux produits alimentaires, tels que le chocolat au lait, entre autres.

Le lait de vache est également consommé directement comme boisson, parfois mélangé à d'autres ingrédients (chocolat en poudre, sucre, aromes), ajouté à des boissons (p.ex. café, thé, cappuccino), ou à des céréales pour petits déjeuners, par exemple à un Müesli, pour ne citer que quelques exemples de l'utilisation du lait.

La qualité nutritive du lait, particulièrement riche en protéines, est incontestée. Cependant, beaucoup de personnes renoncent aujourd'hui partiellement ou entièrement à la consommation du lait. D'une part, les personnes dont l'organisme ne produit pas ou pas suffisamment d'enzyme lactase ne peuvent pas digérer le lactose, le sucre naturellement présent dans le lait. Les personnes souffrant d'une telle intolérance au lactose sont obligées de remplacer le lait de vache, par exemple par d'autres boissons. D'autre part, les personnes souffrant d'un trouble du métabolisme de la phénylalanine (la phénylcétonurie) sont obligées de suivre un régime pauvre en phénylalanine. Comme la caséine, la protéine principale du lait, contient la phénylalanine, ces personnes ne peuvent consommer que peu de lait. Enfin, les personnes qui doivent suivre un régime pauvre en cholestérol peuvent également renoncer au moins au lait entier, car la fraction lipide du lait (la crème) est riche en cholestérol. La crème du lait contient également des acides gras saturées, dont la consommation augmente la présence des triglycérides dans le sang et notamment la concentration des lipoprotéines de basse densité (LDL), aussi connus sous le nom de "mauvais cholestérol". Le cholestérol associé aux LDL après oxydation dans le sang est probablement un marqueur de l'athérosclérose, et cette maladie est une conséquence d'une concentration trop élevée de ce type de cholestérol (hypercholestérolémie). Comme autre élément, on peut mentionner que la digestion des produits laitiers, riches en protéines, par l'organisme humain prend beaucoup de temps. Ces produits ne sont pas toujours très digestes, et peuvent entraîner des indigestions et des sensations de constipation.

Un nombre grandissant de personnes renonce au lait de vache non pas pour des raisons de santé, mais pour des raisons de consciences. Les végans, par exemple, renoncent à la consommation de tout produit d'origine animale, y compris le lait. Ces personnes peuvent déplorer les conditions de vie des animaux domestiques dédiés à la production d'aliments tels que la viande ou le lait. L'élevage de ces animaux est souvent intégré dans une production industrielle d'aliments et est ainsi soumis à des considérations de profitabilité. Il semble indéniable que sous la pression des lois du marché, la qualité de vie des animaux n'est pas toujours le premier souci des producteurs.

Dans le commerce, il existe une multitude de boissons végétales qui peuvent servir de substitut au lait de vache, ou qui peuvent être consommées à part entière, par exemple pour leurs qualités gustatives ou nutritionnelles. Chacune de ces boissons végétales présente des avantages et des inconvénients. Comme les goûts varient, les personnes peuvent préférer l'une ou l'autre de ces boissons. Par exemple, le lait de soja peut être comparé au lait de vache en ce qui concerne sa teneur en protéines. En revanche, ce lait végétal a souvent un goût typique du soja. Pour rendre le lait de soja acceptable pour un grand nombre de consommateurs, du sucre cristallisé peut être ajouté, ce qui peut être indésirable, par exemple pour les personnes souffrant du diabète. Un autre lait végétal qui est consommé en grande quantité est le lait d'avoine, dont la saveur douce et sa teneur en bêta-glucane sont généralement appréciées. L'inconvénient est que ce lait contient du gluten, ce qui n'est pas souhaitable pour les personnes coeliaques, par exemple.

Une boisson relativement peu connue dans la plupart des pays est le lait de souchet, une boisson à base de souchet comestible. Ce lait végétal est fabriqué essentiellement en Espagne sur la base des tubercules des variétés comestibles de la plante *Cyperus esculentus.* Ces tubercules sont connues comme noix de souchets, "tiger nuts" en anglais et encore "Erdmandeln" en allemand.

En Espagne, le lait de souchet est appelé "Horchata de chufa", et il est offert dans des restaurants spécialisés, les *Horchaterias.* Traditionnellement, du sucre est ajouté au lait de souchet, car ce dernier est souvent consommé en tant que sucrerie ou dessert. Le sucre ajouté permet également d'augmenter la stabilité de la boisson, lorsque cette dernière est préparée et commercialisée fraiche. On trouve également des formes de longue conservation de la boisson. Dans ce cas, la boisson est généralement exposée à un traitement thermique à haute température (UHT), pour la rendre stérile et stable pendant plusieurs mois à température ambiante.

Le lait de souchet frais présente un grand nombre de vertus. Il contient naturellement des sucres et il n'est pas nécessaire d'ajouter du sucre cristallin pour le rendre appréciable. Son goût apprécié rappelle celui de la noix de coco et de l'amande. Il contient naturellement des lipides et le profil des acides gras contenus dans la partie lipidique ressemble à celui de l'huile d'olive, notamment en ce qui concerne la fraction des acides oléiques et linoléiques. Même si le lait de souchet n'est pas aussi riche en protéine que le lait de soja, il contient tous les acides aminés essentiels, à l'exception de l'histidine. Enfin, un bon nombre de vertus pour la santé sont associées au lait de souchet, et on peut facilement trouver plus d'informations sur Internet.

Comme le lait de souchet contient naturellement des sucres, il constitue un substrat idéal pour la croissance des bactéries. Les noix de souchets sont des tubercules cultivés dans la terre. Par conséquent, elles contiennent naturellement des bactéries végétatives ainsi que des spores à leur surface. La réduction de la charge microbienne, l'élimination des spores ou l'empêchement de leur activation sont des facteurs clé pour la stabilisation de tout aliment, ceci étant particulièrement vrai dans le cas du lait de souchet.

Il convient de noter que la stabilisation du lait de souchet par traitement thermique constitue un problème technique en soi en raison de la présence d'amidons dans le lait. Lors du traitement thermique, les amidons ont tendance à gélatiniser et ainsi à modifier complétement les propriétés organoleptiques de la boisson, en particulier à augmenter la viscosité de la boisson. Ce problème peut être résolu, par exemple, par l'ajout de certains agents stabilisants ou encore par un traitement enzymatique visant à hydrolyser les molécules d'amidon. Toutes ces solutions ont leurs inconvénients. Par exemple, certains agents stabilisants ne sont pas acceptés par tous les consommateurs. L'hydrolyse de l'amidon nécessite une étape de procédure additionnelle, qui peut changer de manière indésirable le nature de la boisson. Enfin, le traitement thermique est connu pour avoir un impact négatif sur certains nutriments ou composants actifs, tels que les vitamines qui sont sensibles à la chaleur. Les traitements thermiques peuvent engendrer des modifications de la texture, de la couleur, de l'apparence et de la qualité nutritive du produit.

Un objectif de la présente invention est de mettre à disposition une boisson végétale ayant une durée de conservation suffisamment longue pour permettre la commercialisation en portions, par exemple en bouteilles. De préférence, la boisson conserve une grande partie des nutriments, y compris ceux qui sont sensibles aux traitements thermiques.

Il a été observé qu'un traitement thermique peut engendrer la germination des spores. Un objectif de la présente invention est d'augmenter la durée de conservation de la boisson végétale sans engendrer la germination des spores.

Un objectif de la présente invention est également de mettre à disposition une boisson à base de souchet pouvant être conservée pendant plus d'une semaine, de préférence plus de deux semaines, de préférence si la boisson est réfrigérée à 0.5-10°C, par exemple à 4°C.

La publication de Roselló-Soto et al, dont le tire est: Thermal and non-thermal préservation techniques of tiger nuts' beverage "horchata de chufa". Implications for food safety, nutritional and quality properties, Food Research International 105 (2018) 945-951 résume d'abord les propriétés générales des noix de souchets et indique que ces tubercules contiennent des bactéries potentiellement dangereuses pour la santé, ce qui est la conséquence du fait que ces tubercules poussent dans la terre. Dans cet article de synthèse, les auteurs discutent les méthodes de préservation non-thermiques (ou non-conventionnelles), telles que la conservation par champ électrique (Pulsed Electric Field Processing, PEF), la radiation par la lumière UV, l'homogénéisation à haute pression (HPH), et le traitement à haute pression (High Pressure Processing, HPP), également connu sous le nom de pascalisation.

Roselló-Soto et al se réfèrent à la thèse de Elbrhami (The University of Guelph, Ontario, Canada 2016) portant le titre *A comparative Study of the Effects of High Hydrostatic Pressure and Ultraviolet Light on Stability, Health Related Constituents and Quality Parameters of Tiger Nut Milk.*

Elbrhami (2016) a exposé des tubes contentant 50 ml de lait de souchet à un traitement HPP (400-600 MPa/11°C/60-180s) et a observé une réduction de 5-6 et 6-7 log₁₀ CFU de *E. coli, Salmonella* et *L. innocua* après l'application de pressions respectivement de 500 MPa ou 600 MPa, pendant 180 s. L'auteur a observé un changement significatif de la viscosité lors d'un traitement à 600 MPa. Alors même que la couleur de la boisson et certains caractéristiques physicochimiques ont été affectées lors de certains traitements, l'auteur conclut que le HPP est une technologie prometteuse pour augmenter la durée de conservation de la boisson.

Un des problèmes observés dans le traitement à haute pression de certaines boissons végétales est la séparation en plusieurs phases lors du traitement par HPP, en général deux phases. Cette séparation de phases n'est en général pas acceptée par les consommateurs, car elle enlève l'aspect naturel et frais du produit.

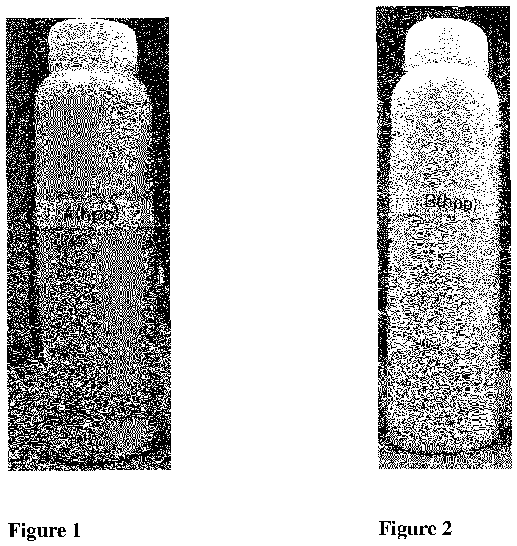

L'inventeur de la présente invention a en particulier observé que le traitement par HPP d'une boisson à base de souchet dans des contenants en plastiques d'un volume d'environ 350 ml engendre une séparation en trois phases visuellement reconnaissables, affectant de manière significative l'aspect visuel du produit. La Figure 1 montre un exemple de cette séparation de phases. La séparation de phases n'a pas été spécifiquement mentionnée dans la publication de Elbrhami (2016) citée ci-dessus. La séparation de phases observée par le présent inventeur pourrait être lié au volume traité par HPP. Il convient de noter que dans le cas de la HPP, le récipient contenant la boisson, par exemple la bouteille en plastique, est exposé au traitement. Il est possible que les effets du traitement sur les propriétés physicochimiques dépendent de la taille du récipient, c'est-à-dire du volume du récipient.

### Résumé de l'Invention

De manière surprenante, l'inventeur a observé que la séparation en plusieurs phases d'une boisson à base de souchet due à un traitement par pascalisation peut être réduite lorsqu'une partie des particules solides dans la boisson est séparée de la boisson avant le traitement par pascalisation. L'aspect du produit peut encore être amélioré par l'homogénéisation de la boisson.

De façon plus générale, le même résultat avantageux peut être obtenu par tout traitement permettant de faire disparaître de la boisson des microparticules en suspension ayant une taille définie. Ces microparticules seront également appelées les microparticules de taille moyenne. Un tel traitement peut être l'enlèvement de ces microparticules ou encore la diminution de leur taille.

Selon un aspect, l'invention concerne une méthode pour augmenter la stabilité et/ou la durée de conservation d'une boisson à base de souchet, comportant : a) le traitement de la boisson de façon qu'au moins une partie des microparticules en suspension dans la boisson disparaît, b) le remplissage de la boisson obtenue à l'étape a) dans des récipients, et, c) le traitement des récipients remplis par une pascalisation. De préférence, dans l'étape a), une partie des particules ayant une taille de 15 à 70 µm, de préférence de 20 à 60 µm disparaît.

Selon un aspect, l'invention concerne une méthode pour augmenter la stabilité d'une boisson à base de souchet, comprenant : a) l'enlèvement d'au moins une partie de la matière sèche contenue dans la boisson, b) le remplissage de la boisson obtenue à l'étape a) dans des récipients, et, c) le traitement par pascalisation des récipients remplis.

Selon un aspect, l'invention concerne une pour augmenter la durée de conservation d'une boisson à base de souchet, comportant : a) le traitement de la boisson de façon qu'au moins une partie des microparticules en suspension dans la boisson disparaît, b) le remplissage de la boisson obtenue à l'étape a) dans des récipients, et, c) le traitement des récipients remplis par une pascalisation.

Selon un aspect, l'invention concerne une méthode pour augmenter la durée de conservation d'une boisson à base de souchet, comprenant : a) l'enlèvement d'au moins une partie de la matière sèche contenue dans la boisson, b) le remplissage de la boisson obtenue à l'étape a) dans des récipients, et, c) le traitement par pascalisation des récipients remplis.

Selon un autre aspect, l'invention concerne une méthode pour la préparation d'une boisson à base de souchet, comportant: i. le broyage de noix de souchets en présence d'eau et la récupération de l'eau dans laquelle des composants des noix de souchet broyées sont dissout et/ou suspendus, afin d'obtenir ladite boisson à base de souchet, et, ii. le traitement de la boisson selon l'invention.

Selon un autre aspect, l'invention concerne une méthode pour diminuer l'ampleur d'une séparation de phases d'une boisson à base de souchet en raison d'un traitement par pascalisation, la méthode comportant le traitement de la boisson de façon qu'au moins une partie des microparticules en suspension dans la boisson disparaît.

Selon un autre aspect, l'invention concerne une boisson à base de souchet, caractérisée en ce qu'elle peut être obtenue par la méthode de l'invention.

Selon encore un autre aspect, l'invention concerne une boisson à base de souchet, caractérisée en ce que les microparticules de 15 à 70 µm constituent moins de 40% en volume de la matière solide suspendue dans la boisson, de préférence moins de 30%, encore de préférence moins de 20%, encore de préférence moins de 15%.

Selon encore un autre aspect, l'invention concerne une boisson à base de souchet, caractérisée en ce que les microparticules de 20 à 60 µm constituent moins de 40% en volume de la matière solide suspendue dans la boisson, de préférence moins de 30%, encore de préférence moins de 20% encore de préférence moins de 15%.

Selon un autre aspect, l'invention concerne une boisson à base de souchet, caractérisée en ce que la quantité (le nombre) des microparticules ayant un diamètre de 15 à 70 µm constitue moins de 50%, de préférence moins de 40%, de préférence moins de 30%, encore de préférence moins de 20%, encore de préférence moins de 10%, encore de préférence moins de 5% des microparticules dans la boisson, en particulier des microparticules ayant un diamètre de 1 à 70 µm.

Selon un autre aspect, l'invention concerne une boisson à base de souchet, caractérisée en ce que la quantité (le nombre) des microparticules ayant un diamètre de 25 à 45 µm constitue moins de 50%, de préférence moins de 40%, de préférence moins de 30%, encore de préférence moins de 20%, encore de préférence moins de 10%, encore de préférence moins de 5% des microparticules dans la boisson, en particulier des microparticules ayant un diamètre de 1 à 45 µm.

Selon un autre aspect, l'invention concerne une boisson à base de souchet soumise à une pascalisation.

D'autres aspects de l'invention et des modes de réalisation préférés sont définis dans les revendications et dans la description ci-après.

### Description des dessins

La figure 1 montre une bouteille d'un volume de 350 ml contenant une boisson à base de souchet suite à un traitement par pascalisation à 600 MPa pendant 540 secondes (s).
La figure 2 illustre une bouteille exposée au même traitement que la bouteille montrée à la figure 1, contenant une boisson à base de souchet dont une partie de la matière sèche suspendue a été supprimé par décantation.
La figure 3 est un graphique illustrant le résultat d'une analyse de la taille des particules présentes dans la boisson à base de souchet après la préparation de la boisson. La boisson analysée correspond à celle utilisée pour la préparation de la bouteille illustrée par la figure 1.
La figure 4 est un graphique illustrant le résultat d'une analyse de la taille des particules présentes dans la boisson à base de souchet après le traitement à l'aide d'un séparateur et d'une homogénéisation. La boisson analysée correspond à celle utilisée pour la préparation de la bouteille montrée à la figure 2.
La figure 5 est un graphique montrant la diminution en log₁₀ du nombre des CFU (colony forming units) des germes aerobes mesophiles (GAM) par grammes (g) d'une boisson à base de souchet suite à divers régimes de traitements par pascalisation. Le graphique montre un traitement continu de 480s, puis les suivants une à trois répétitions d'un traitement de 180 s sur le même échantillon.
La figure 6 est un graphique montrant le nombre des CFU/g d'une boisson à base de souchet soumise à trois traitements différents comme indiqué et stockée à 4°C pendant une durée de 14 jours. La boisson traitée à 6000 bars pendant 480 s, conformément à un mode de réalisation de la présente invention, reste stable (aucune croissance bactérienne) pendant la durée d'observation.

### Description détaillée des modes de réalisations préférés

La présente invention concerne des méthodes de fabrication et de traitement d'une boisson à base de souchet ainsi que la boisson à base de souchet ainsi obtenue.

Dans le langage courant, les expressions telles que "lait végétal", "lait de soja", "lait de souchet" sont utilisées, alors que selon la législation de plusieurs pays, le terme "lait" est réservé au lait d'origine animale. Il est ainsi plus approprié de parler, dans le cadre de la présente invention d'une "boisson à base de souchet".

Dans le contexte de la présente invention, une "boisson à base de souchet" ressemble ou est similaire à la "horchata de chufa" (ci-après: "horchata") connue en Espagne. Ci-après, l'expression "boisson" se réfère à la "boisson à base de souchet", à moins qu'une autre signification ne ressorte du contexte.

Dans le présent descriptif, les expressions couramment utilisées "noix" ou "noix de souchets" sont utilisées, pour désigner le tubercule des variétés comestibles de *Cyperus esculentus.*

Dans un mode de réalisation préféré, la boisson selon l'invention ne contient pas de saccharose ajouté, en particulier pas de saccharose cristallin ajouté. Par conséquent, une étape dans laquelle le saccharose est ajouté à la boisson est de préférence absente dans les méthodes selon l'invention.

La boisson à base de souchet contient naturellement des sucres, dont le saccharose. Elle est ainsi légèrement sucrée. Dans le cas où l'on souhaite augmenter davantage le goût sucré (par exemple la teneur en saccharose), selon un mode de réalisation préféré, l'invention envisage l'ajout de plantes sucrées ou de leurs extraits, par exemple l'ajout de fruits ou d'extraits de fruits, à la boisson.

Des agents sucrés qui peuvent être ajoutés selon un mode préféré de l'invention peuvent être choisis, par exemple, parmi le miel, le sirop d'érable, et un extrait de stevia. L'invention n'exclut cependant pas que le saccharose, un ou plusieurs autres sucres et/ou agents sucrés artificiels soit ajouté à la boisson.

La boisson est traditionnellement préparée par le broyage et/ou le concassage des noix de souchets dans l'eau, suivi par la récupération du liquide laiteux par tamisage. Les noix de souchets peuvent être ou non trempées dans l'eau avant le broyage. Au niveau industriel, des extracteurs ou moulins automatiques sont généralement utilisés pour effectuer le broyage.

Dans un mode de réalisation, la méthode pour la préparation d'une boisson à base de souchet comporte le broyage de noix de souchets en présence d'eau et la récupération de l'eau dans laquelle des composants des noix broyées sont dissouts et/ou suspendus, afin d'obtenir ladite boisson à base de souchet. Comme indiqué ci-dessus, un filtrage plus ou moins grossier à l'aide d'un tamis peut être effectué afin de séparer la boisson des restes de noix, typiquement la peau de noix ou d'autre parties qui ne seront ni dissoutes ni suspendues dans l'eau. Les extracteurs industriels contiennent généralement un mécanisme de séparation permettant de séparer ces restes. En général, la préparation de la boisson est également appelé "extraction" dans le présent descriptif. L'extraction de la boisson à base de souchet à partir des noix est également décrite dans la publication de Roselló-Soto 2018, citée ci-dessus.

En raison du filtrage, une partie des particules suspendues est généralement filtrée et ces particules sont donc absentes dans la boisson. Typiquement, des filtres ou tamis dont les mailles ont des dimensions de 80-300 µm sont utilisés. Pour des raisons de goût, il est considéré comme préférable d'utiliser des dimensions de maille relativement élevées (100-200 µm), afin de laisser les particules de taille (diamètre) plus petites passer dans la boisson.

Selon un mode de réalisation, la méthode de l'invention comporte le traitement de la boisson de façon qu'au moins une partie des microparticules en suspension dans la boisson disparaît. Pour faire ceci, il est possible d'enlever une partie de la matière sèche contenue dans la boisson ou de diminuer la taille d'une partie des microparticules ayant une taille de 15 à 70 µm, de préférence de 20 à 60 µm.

Selon un mode de réalisation, la méthode de l'invention comporte l'enlèvement d'au moins une partie de la matière sèche contenue dans la boisson. De préférence, au moins une partie des microparticules en suspension dans la boisson est enlevée.

L'expression "matière sèche" se réfère à l'ensemble des composants dans la boisson autre que l'eau. Cette expression englobe à la fois les solides ou la matière solide (particules en suspension) et les composants dissouts. En termes de composition, cette expression englobe tous les nutriments, fibres, et autres molécules et substances présents dans la boisson après l'extraction.

Ladite partie sèche peut être enlevée par différents procédés tels que la filtration, décantation, la sédimentation et/ou encore par centrifugation. Par exemple, une décantation par gravité et/ou la décantation centrifuge peut être effectuée. La décantation centrifuge peut être effectuée, par exemple, à l'aide d'une centrifugeuse à assiettes ou d'une centrifuge à vis convoyeuse. Dans un mode de réalisation l'étape a) comprend une filtration et/ou une séparation à l'aide d'un filtre, séparateur, d'un décanteur gravimétrique ou centrifuge et/ou d'une centrifugeuse.

De façon générale, l'étape a) est de préférence effectuée en continue en utilisant de préférence un dispositif permettant d'effectuer l'étape a) en continu, mais un traitement par lots n'est pas exclu et est donc également couverte par l'invention.

Selon un mode de réalisation, dans l'étape a), la taille des microparticules en suspension dans la boisson est diminuée. Ainsi, l'invention envisage l'élimination des microparticules non par enlèvement, mais par réduction de la taille des microparticules. Dans ce cas, les microparticules peuvent être coupées, concassées et/ou broyées de façon que la quantité (en poids et en volume) des "microparticles de taille moyenne" augmente alors que la quantité des "grandes" microparticules diminue. Dans ce cas, l'étape a), ou une partie de l'étape a), peut être effectuée, par exemple, à l'aide d'un moulin colloïdal ou d'un moulin à billes, ou tout autre équipement, qui permet de réduire physiquement la taille des microparticules. Dans ce cas, il n'y a pas nécessairement d'enlèvement de matière sèche, cette dernière étant normalement pas ou relativement peu affectée par la réduction de la taille des particules.

Dans le présent descriptif, l'expression "autrement éliminé" et les variations grammaticales de cette expression se réfèrent à une élimination autre que l'enlèvement des microparticules de la boisson. Cette expression se réfère en particulier à la diminution physique de la taille des particules, par exemple par concassage, broyage ou découpe.

Dans un mode de réalisation préféré, dans l'étape a), une partie de la matière sèche suspendue dans la boisson est enlevée et/ou autrement éliminée.

Dans un mode de réalisation préféré, dans l'étape a), une partie des microparticules contenues dans la boisson est enlevée et/ou autrement éliminée. Ces microparticules sont généralement en suspension dans la boisson et font ainsi partie des solides en suspension de la boisson.

Dans un mode de réalisation préféré, dans l'étape a), au moins une partie des microparticules d'un diamètre inférieure à 100 µm, de préférence inférieur à 70 µm, encore de préférence inférieur à 60 µm, en encore de préférence inférieur à 50 µm est enlevée et/ou autrement éliminée.

Dans un mode de réalisation préféré, dans l'étape a), au moins une partie des microparticules d'un diamètre inférieur à 70 µm, de préférence inférieur à 60 µm, encore de préférence inférieur à 50 µm, en encore de préférence inférieur à 45 µm est enlevée et/ou concassée.

Dans un mode de réalisation, "au moins une partie des microparticules", se réfère à 40% en volume ou plus des particules ayant le diamètre indiqué. Encore de préférence, 50% en volume ou plus, 60% en volume ou plus des particules ayant le diamètre indiqué est enlevée, encore de préférence 75% en volume ou plus, encore de préférence 85% et encore de préférence 90% en volume ou plus.

Dans un mode de réalisation, dans l'étape a), 40% en volume ou plus des particules ayant une taille entre 10-100 µm sont enlevés et/ou autrement éliminés. Encore de préférence, 50% en volume ou plus, 60% en volume ou plus des particules ayant le diamètre indiqué sont enlevés et/ou autrement éliminés, encore de préférence 75% en volume ou plus, encore de préférence 85% et encore de préférence 90% en volume ou plus.

Comme indiqué ci-dessus, les microparticules ayant une certaine taille peuvent être éliminées dans l'étape a) de la méthode de l'invention par diminution physique, par exemple par concassement, broyage, etc, à fin qu'elles soient transformées en particules ayant une taille plus petite. De cette façon, les microparticules de la taille concernée se trouvant dans la boisson d'origine disparaissent également de la boisson et apparaissent comme particules de plus petite taille.

Dans un mode de réalisation, dans l'étape a) 40% en volume ou plus des particules ayant une taille entre 15-70 µm sont enlevés et/ou autrement éliminés. Encore de préférence, 50% en volume ou plus, 60% en volume ou plus des particules ayant le diamètre indiqué sont enlevés et/ou autrement éliminés, encore de préférence 75% en volume ou plus, encore de préférence 85% et encore de préférence 90% en poids ou plus.

Dans un mode de réalisation, dans l'étape a) 40% en volume ou plus des particules ayant une taille entre 20-60 µm sont enlevés et/ou autrement éliminés. Encore de préférence, 50% en volume ou plus, 60% en volume ou plus des particules ayant le diamètre indiqué sont enlevés et/ou autrement éliminés, encore de préférence 75% en volume ou plus, encore de préférence 85% et encore de préférence 90% en poids ou plus.

Dans un mode de réalisation, dans l'étape a) 40% en volume ou plus des particules ayant une taille entre 25-50 µm sont enlevés et/ou autrement éliminés. Encore de préférence, 50% en volume ou plus, 60% en volume ou plus des particules ayant le diamètre indiqué sont enlevés et/ou autrement éliminés, encore de préférence 75% en volume ou plus, encore de préférence 85% et encore de préférence 90% en poids ou plus.

Le "diamètre" et encore la "taille" des microparticules est de préférence déterminé à l'aide un appareil approprié. Dans un mode de réalisation, l'appareil est un Camsizer XT, commercialisé par Retsch Technology GmbH en Allemagne, en phase liquide (solvant eau) avec module "X-Flow wet mode" liquide en utilisant la configuration recommandée. Les résultats Q3 obtenus à l'aide de cet instrument sont la proportion en volume de particules, c'est-à-dire la distribution cumulative (% passing), basée sur le volume.

Dans un mode de réalisation préféré, dans l'étape a), au moins une partie des microparticules d'un diamètre supérieur ou égal à 20 µm, de préférence supérieur ou égal à 25 µm, encore de préférence supérieur ou égal à 30 µm, est enlevée et/ou autrement éliminée.

Dans un mode de réalisation préféré, dans l'étape a), au moins une partie des microparticules d'une taille entre 10-100 µm, de préférence d'une taille entre 15-70 µm, de préférence d'une taille entre 20-60, encore de préférence d'une taille entre 25-50 est enlevée et/ou autrement éliminée.

Selon un mode de réalisation, au moins une partie des microparticules d'une taille entre 25-45 µm, et encore de préférence d'une taille entre 25-35 µm est enlevée et/ou autrement éliminée dans l'étape a).

Il convient de noter que, selon les observations de l'inventeur, la boisson à base de souchet, suite à l'extraction et donc déjà avant l'étape a), ne contient de préférence pas ou peu de grandes particules, c'est-à-dire des microparticules ayant un diamètre supérieur à 80 µm, de préférence supérieur à 70 µm, encore de préférence supérieur à 60 µm ou supérieur à 50 µm, en particulier des particules, qui ont, en outre un diamètre inférieur à 300 µm, de préférence inférieur à 200 µm, encore de préférence inférieur à 100 µm.

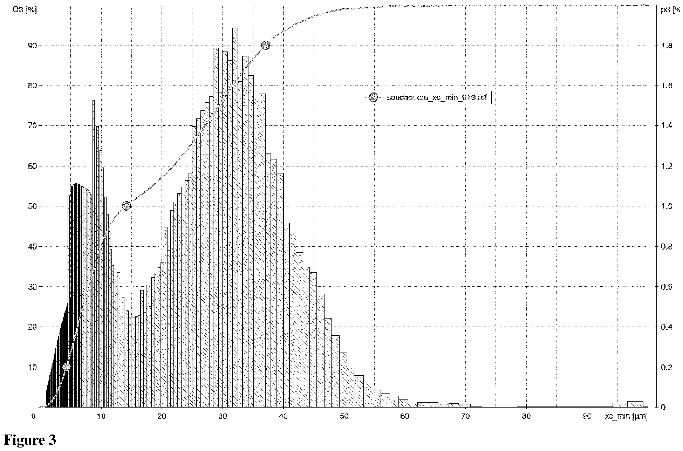

Comme on peut le voir à la Figure 3, la boisson à base de souchet ne contient, de préférence, pas ou comparativement peu de particules ayant un diamètre supérieur à 60 µm, par exemple entre 60 et 100 µm (les "grandes" microparticules). Les grandes microparticules peuvent être naturellement absentes en raison du choix de la méthode d'extraction et/ou encore en raison d'un filtrage/tamisage et/ou autre traitement physique effectué suite à l'extraction, mais avant l'étape a) selon l'invention.

Un filtrage des grandes microparticules avant l'étape a) peut être considéré comme un pré-filtrage. Dans ce cas, l'étape a) peut avoir lieu après ledit pré-filtrage.

Alternativement, le pré-filtrage et l'élimination des microparticules selon l'étape a) ("microparticules de taille moyenne"), par exemple ayant un diamètre entre environ 15 et 70 µm, ou selon un autre mode de réalisation comme indiqué ci-dessus, peut avoir lieu au même temps et/ou en une seule étape de séparation. En d'autres termes les grandes et microparticules de taille moyenne peuvent être éliminées au même temps.

Dans un mode de réalisation, les microparticules ayant un diamètre d'environ 70 µm ou plus peuvent être considérées comme les grandes microparticules et les microparticules de 15 à 70 µm, de préférence de 20-60 µm (etc.) sont considérées comme les microparticules de taille moyenne. Dans un autre mode de réalisation, cette "taille limite" pour les microparticules de taille moyenne est de 25-50 µm, encore de préférence de 25-45 µm, c'est-à-dire, les microparticules d'une taille d'environ 35 µm sont considérés moyennes dans le contexte du présent descriptif.

Il convient de noter que, lors de l'étape a), des "petites" microparticles, par exemple des microparticules ayant un diamètre inférieur à 25 µm, de préférence inférieur à 20 µm, encore de préférence inférieur à 15 µm ou inférieur à 12 µm ne sont de préférence pas enlevées ou autrement éliminées dans l'étape a) et restent de préférence dans la boisson finale, ou à moins la majeure partie de ces particules restent dans la boisson finale.

De préférence, après l'étape a), la boisson ne contient plus ou très peu de microparticules en suspension d'un diamètre supérieur à 60 µm (les grandes microparticules), ou alors ces particules constituent moins de 50% en volume de toutes les microparticules en suspension, de préférence moins de 30vol.%, encore de préférence moins de 15 vol.%.

Ceci s'applique quand ces microparticules sont enlevées pendant ou avant l'étape a), ou encore si ces particules sont naturellement absentes dans la boisson après l'extraction.

De préférence, après l'étape a), la boisson ne contient plus ou très peu de microparticules en suspension d'un diamètre supérieur à 50 µm, ou alors ces particules constituent moins de 50% en volume de toutes les microparticules en suspension, de préférence moins de 30vol.%, encore de préférence moins de 15vol.%.

De préférence, après l'étape a), la boisson ne contient plus ou très peu de microparticules en suspension d'un diamètre supérieur à 45 µm, ou alors ces particules constituent moins de 50% en volume de toutes les microparticules en suspension, de préférence moins de 30vol.%, encore de préférence moins de 15vol.%.

De préférence, après l'étape a), la boisson ne contient plus ou très peu de microparticules en suspension d'un diamètre supérieur à 30 µm, ou alors ces particules constituent moins de 50% en volume de toutes les microparticules en suspension, de préférence moins de 30vol.%, encore de préférence moins de 15vol.%.

De préférence, après l'étape a), la boisson ne contient plus ou très peu de microparticules en suspension d'un diamètre supérieur à 25 µm, ou alors ces particules constituent moins de 50% en volume de toutes les microparticules en suspension, de préférence moins de 30vol.%, encore de préférence moins de 15vol.%.

Dans un mode de réalisation, l'invention concerne une boisson à base de souchet, caractérisée en ce que les microparticules de 15 à 70 µm constituent moins de 50%, de préférence moins de 30%, encore de préférence moins de 20%, et encore de préférence moins de 10% en volume de la matière sèche suspendue dans la boisson.

Dans un mode de réalisation, l'invention concerne une boisson à base de souchet, caractérisée en ce que les microparticules de 15 à 70 µm constituent moins de 25%, de préférence moins de 20%, encore de préférence moins de 10%, et encore de préférence moins de 5% en volume de la matière sèche suspendue dans la boisson.

Dans un mode de réalisation, l'invention concerne une boisson à base de souchet, caractérisée en ce que les microparticules de 20 à 60 µm constituent moins de 50%, de préférence moins de 30%, encore de préférence moins de 20%, et encore de préférence moins de 10% en volume de la matière sèche suspendue dans la boisson.

Dans un mode de réalisation, l'invention concerne une boisson à base de souchet, caractérisée en ce que les microparticules de 20 à 60 µm constituent moins de 25%, de préférence moins de 20%, encore de préférence moins de 10%, et encore de préférence moins de 5% en volume de la matière sèche suspendue dans la boisson.

Dans un mode de réalisation, l'invention concerne une boisson à base de souchet, caractérisée en ce que les microparticules de 25 à 50 µm constituent moins de 40%, de préférence moins de 30%, encore de préférence moins de 20%, et encore de préférence moins de 10% en volume de la matière sèche suspendue dans la boisson.

Dans un mode de réalisation, l'invention concerne une boisson à base de souchet, caractérisée en ce que les microparticules de 25 à 50 µm constituent moins de 40%, de préférence moins de 30%, encore de préférence moins de 20%, et encore de préférence moins de 10% en volume de la matière sèche suspendue dans la boisson.

Dans un mode de réalisation, l'invention concerne une boisson à base de souchet, caractérisée en ce que les microparticules de 25 à 45 µm constituent moins de 40%, de préférence moins de 30%, encore de préférence moins de 20%, et encore de préférence moins de 10% en volume de la matière sèche suspendue dans la boisson.

Dans un mode de réalisation, l'invention concerne une boisson à base de souchet, caractérisée en ce que les microparticules de 25 à 45 µm constituent moins de 40%, de préférence moins de 30%, encore de préférence moins de 20%, et encore de préférence moins de 10% en volume de la matière sèche suspendue dans la boisson.

Dans un mode de réalisation, la matière sèche enlevée ou autrement éliminé pendant l'étape a) constitue entre environ 1 et environ 30% en poids de la matière sèche de la boisson, de préférence entre 1 et 25% en poids.

Dans un mode de réalisation préféré, dans l'étape a) 1 à 20% en poids de la matière sèche de la boisson sont enlevés, de préférence 2 à 18%, encore de préférence 3 à 15 %. De préférence de 7 à 13% de la matière sèche sont enlevés dans l'étape a), par exemple de 8 à 12% en poids de la matière sèche sont enlevés.

Ces pourcentages correspondent de préférence à la matière sèche formée par les microparticules en suspension de la taille indiquée ci-dessus qui sont présentes avant l'étape a) et/ou qui sont enlevées ou autrement éliminés pendant l'étape a). De préférence, ces pourcentages en matière sèche correspondent à la matière sèche formée par les "microparticules de taille moyenne" qui sont enlevées ou autrement éliminées dans l'étape a) selon le présent descriptif. Le 100% en poids de la matière sèche correspond à la matière sèche de la boisson avant l'étape a).

Dans un mode de réalisation, dans l'étape a), au moins une partie des particules ayant une taille entre 10-100 µm est enlevée de façon que la matière sèche totale de la boisson est diminuée de 1 à 25% en poids, de préférence de 2 à 20%, de préférence 3 à 18%, encore de préférence 5 à 15 %.

Dans un mode de réalisation, dans l'étape a), au moins une partie des particules ayant une taille entre 10-75 µm est enlevée de façon que la matière sèche totale de la boisson est diminuée de 1 à 25% en poids, de préférence de 2 à 20%, de préférence 3 à 18%, encore de préférence 5 à 15 %.

Dans un mode de réalisation, dans l'étape a) au moins une partie des particules ayant une taille entre 20-60 µm est enlevée de façon que la matière sèche totale de la boisson est diminuée de 1 à 25% en poids, de préférence de 2 à 20%, de préférence 3 à 18%, encore de préférence 5 à 15 %.

Dans un mode de réalisation, dans l'étape a) au moins une partie des particules ayant une taille entre 25-50 µm est enlevée de façon que la matière sèche totale de la boisson est diminuée de 1 à 25% en poids, de préférence de 2 à 20%, de préférence 3 à 18%, encore de préférence 5 à 15 %.

Dans un mode de réalisation, la boisson, après l'étape a), présente une teneur en matière sèche de 5 à 20% en poids.

Dans un mode de réalisation, préféré, la boisson, après l'étape a), présente une teneur en matière sèche de 7 à 14% en poids, de préférence 8 à 12%, encore de préférence 8.5-11%.

Dans un mode de réalisation, la boisson finale de l'invention, après les étapes a)-c), présente une teneur en matière sèche de 5 à 20% en poids.

Dans un mode de réalisation, préféré, la boisson finale de l'invention, après les étapes a)-c), présente une teneur en matière sèche de 7 à 14% en poids, de préférence 8 à 12%, encore de préférence 8.5-11%.

Dans un mode de réalisation préféré, la méthode de l'invention comporte l'homogénéisation de la boisson, de préférence avant le remplissage, encore de préférence avant l'étape a) ou simultanément à l'étape a).

Dans un mode de réalisation préféré, l'homogénéisation est effectuée après l'étape a), afin d'empêcher une perturbation de l'homogénéisation par la matière sèche (particules) éliminée pendant l'étape a).

L'homogénéisation peut être effectuée à l'aide d'un homogénéisateur approprié, par exemple un homogénéisateur à un ou deux étages. Un étage est en principe suffisant. De préférence, la pression lors de l'homogénéisation est de l'ordre de 100 à 1500 bars, de préférence 110 à 1000 bars, encore de préférence de 120 à 800 bars. Une pression au-dessous de 500 bars et de préférence au-dessous de 300 bars est préférée, en raison des changements de couleur de la boisson que le présent inventeur a observé lorsqu'une pression au-dessus de 200 bars, par exemple 460 bars, a été appliquée lors de l'homogénéisation.

Dans un mode de réalisation, la méthode comprend une acidification de la boisson. L'inventeur a observé qu'à l'aide d'une acidification, la durée de conservation peut être augmentée davantage. D'autre part, une légère acidification n'a que peu d'influence sur le goût de la boisson ou peut même rendre le goût de la boisson plus rafraichissant. De préférence, la boisson est acidifiée avant l'étape b), de préférence après l'étape a), et le cas échéant, de préférence après l'homogénéisation. Il est également possible d'effectuer l'acidification avant l'étape a).

Dans le cas d'une acidification, le pH est de préférence ajusté de façon que la boisson finale a un pH de 5 à 7.0, de préférence 5.2 à 6.5, encore de préférence de 5 à 6.4. Dans un mode de réalisation préféré, le pH de la boisson finale est de 5.50 à 6.35.

Il convient de noter que l'acidification est optionnelle et n'est conseillée seulement si la durée de conservation doit encore être davantage augmentée.

Si une acidification a lieu, la présente invention n'est pas limitée à une manière particulière d'effectuer cette acidification. Une manière préférée d'acidifier la boisson est l'ajout de jus de citron ou d'un autre jus de fruits naturellement acide, par exemple le jus d'un agrume en général. L'ajout d'un jus d'agrumes permet d'obtenir une boisson ayant un gout naturellement frais.

Dans un mode de réalisation, la méthode comporte le remplissage des récipients avec la boisson après l'étape a). Ces récipients sont de préférence choisis de façon à permettre un traitement par pascalisation. Par exemple, les bouteilles ou autres récipients en PET ou en une autre matière plastique ayant une certaine souplesse ou élasticité peuvent être utilisées. De préférence, la boisson est mise dans une bouteille en matière plastique.

Le récipient présente de préférence un volume nominal (volume de remplissage) de 100 mL (millilitres) à 1L, de préférence de 200 mL à 0.75 L, de préférence de 250 à 500 mL, encore de préférence 250 à 400 mL, par exemple de 300 à 350 mL. La comparaison des résultats de l'état de la technique (Elbrhami, 2016) avec ceux faites par le présent inventeur suggère que le volume du récipient soumis à la pascalisation peut avoir une influence sur les propriétés de la boisson, en particulier les propriétés physicochimiques.

La méthode de l'invention comporte de préférence le traitement des récipients remplis par pascalisation, en particulier à un traitement à haute pression, connu sous l'abréviation HPP, de l'anglais "High Pressure Processing".

La pascalisation implique l'application de pressions importantes à l'aide d'appareils spécialement adaptés. Il existe en particulier des appareils des entreprises Hyperbaric, à 33122 Miami, aux Etats-Unis, ou encore de Avure Technologies, Inc, également aux Etats-Unis. En particulier, le récipient contenant la boisson est chargé dans un conteneur. Lors de le la pascalisation, un liquide est ajouté au conteneur sous haute pression, de façon que la pression du liquide soit dirigée sur les récipients contenant la boisson.

En général, la pascalisation implique l'application d'une pression isostatique. Cette pression isostatique agit de préférence sur le récipient contenant la boisson et, en raison du récipient souple, sur le produit à l'intérieur du récipient.

Dans un mode de réalisation préféré, dans l'étape c) les récipients sont exposés à une pression comprise entre 460 et 810 MPa (4600 à 8100 bar), de préférence entre 490 et 710 MPa, encore de préférence entre 540 et 690 MPa, et encore de préférence entre 570 et 650 MPa.

Dans un mode de réalisation préféré, le récipient est exposé à la pression indiquée (ou les pressions indiquées) pendant une durée d'au moins 150 s, de préférence de plus de 180 s, encore de préférence de 200 s ou plus, encore de préférence de 250 s ou plus.

De préférence, le récipient est exposé à la pression indiquée pendant une durée de 300 s ou plus, 400 s ou plus, 450s ou plus, encore de préférence 500 s ou plus.

Afin d'éviter tout malentendu, il est précisé que la pression est de préférence maintenue dans les valeurs définis par les fourchettes indiquées. Par exemple, lorsque la pression est maintenue pendant 150 s, ladite pression est comprise entre 460 et 810 MPa pendant lesdites 150 s. Il n'est pas nécessaire, mais généralement préféré, que la pression soit maintenue à une valeur spécifique pendant l'ensemble de la durée du traitement (p.ex. 6000 bars pendant 200 s). La pression peut donc varier dans la fourchette pendant le traitement (p.ex. 6000 bars pendant 100 s et 5900 bars pendant 100 s).

Dans un mode de réalisation, les récipients sont exposés à une pression comprise entre 460 et 810 MPa (4900 à 8100 bar), pendant 200 s ou plus, de préférence pendant 300 s ou plus, encore de préférence pendant 350 s ou plus, encore de préférence pendant 400 s ou plus, par exemple pendant 450s ou plus.

Dans un mode de réalisation les récipients sont exposés à une pression comprise entre 490 et 710 MPa, pendant 200 s ou plus, de préférence pendant 300 s ou plus, encore de préférence pendant 350 s ou plus, encore de préférence pendant 400 s ou plus, par exemple pendant 450s ou plus.

Dans un mode de réalisation les récipients sont exposés à une pression comprise entre 540 et 690 MPa, pendant 200 s ou plus, de préférence pendant 300 s ou plus, encore de préférence pendant 350 s ou plus, encore de préférence pendant 400 s ou plus, par exemple pendant 450s ou plus.

Dans un mode de réalisation les récipients sont exposés à une pression de 570 à 650 MPa, pendant 200 s ou plus, de préférence pendant 300 s ou plus, encore de préférence pendant 350 s ou plus, encore de préférence pendant 400 s ou plus, par exemple pendant 450s ou plus.

Pendant la pascalisation, la pression peut être maintenue pendant l'ensemble de la durée indiquée selon les fourchettes indiquées. En d'autres termes, la pression peut être appliquée en une seule fois et/ou en un seul traitement. Par exemple, la pression dans le conteneur contenant les récipients peut être ajustée de façon à être comprise entre 5400 et 6900 bars et être maintenue pendant 250 à 600 secondes. Ensuite, la pression est diminuée pour atteindre la pression ambiante et le traitement par pascalisation est terminé.

Dans un autre mode de réalisation, la pression peut être appliquée en plusieurs fois pour atteindre l'ensemble de la durée indiquée. Selon un exemple, la pression est maintenue pendant une fraction du temps indiqué conformément à la fourchette indiquée, suivi d'un relâchement complet ou partiel de la pression, avant que la pression soit de nouveau augmentée et maintenue pendant une deuxième fraction du temps à l'intérieure de la fourchette indiquée. Par exemple, le récipient peut être exposé à une suite de 1 à 5, de préférence de 1 à 3 suites de pressions selon les fourchettes indiquées.

Par exemple, la pression dans le contenant peut être ajustée entre 5400 et 6900 bars pendant 100 à 200 secondes, suivi d'un relâchement partiel ou complet de la pression (au-dessous des 5400 bars), et suivi d'une nouvelle augmentation de la pression à un niveau entre 5400 et 6900 bars pendant 100 à 200 seconde. Ce traitement peut ainsi être conduit de 2 à 4 fois dans l'ensemble, par exemple.

Le présent inventeur a observé que les paramètres susmentionnés permettent de diminuer de manière importante les cfu (de l'anglais: "colony forming units") des bactéries et/ou autres microorganismes dans la boisson, et ainsi d'augmenter la stabilité de la boisson, en particulier lorsque cette dernière est ensuite réfrigérée.

De préférence, suite à la pascalisation, la boisson est stockée à une température de 0 à 10°C, de préférence de 1 à 7°C, encore de préférence de 2 à 5°C. De préférence, cette température est maintenue jusqu'à la vente et/ou de la consommation de la boisson.

Dans un mode de réalisation, la boisson peut être exposée à un traitement thermique avant l'étape c), de préférence après l'étape a) et de préférence après l'homogénéisation optionnelle. Le présent inventeur a observé que la combinaison d'un traitement thermique suivi d'une pascalisation permet d'augmenter de manière importante la destruction des microorganismes et ainsi d'augmenter la durée de conservation de la boisson.

Dans le cas d'un traitement thermique, la boisson est de préférence exposée à une température d'au moins 60°C, de préférence d'au moins 65°C, encore de préférence au moins 70°C. Dans un mode de réalisation, ladite température est maintenue pendant une durée de 15 s ou plus, de préférence de 60 s ou plus, encore de préférence de 360 s ou plus.

La présente invention porte également sur la boisson telle qu'obtenue par la méthode de l'invention.

Dans un mode de réalisation, le pH de la boisson est entre 5.5 et 8.0, de préférence entre 6 et 7.5, encore de préférence entre 6.5 et 6. Contrairement aux jus de fruits, qui sont généralement traités par HPP, la boisson de l'invention a de préférence un pH relativement élevé, ce qui pourrait favoriser la croissance des microorganismes.

Une particularité de la boisson à base de souchet selon l'invention est que les microparticules de 20 à 60 µm constituent moins de 40% en volume de la matière solide en suspension dans la boisson, de préférence moins de 30%, encore de préférence moins de 20%, encore de préférence moins de 10%. De préférence, ces microparticules constituent moins de 5%, de préférence moins de 3% et encore de préférence moins de 1% en volume des microparticules en suspension dans la boisson.

Dans un mode de réalisation, la quantité (le nombre) des microparticules de 20 à 60 µm (en diamètre) constitue moins de 60% des microparticules d'un diamètre de 1 à 60 µm en suspension dans la boisson, de préférence mois de 40%, encore de préférence moins de 25%, encore de préférence moins de 15%. De préférence, la quantité des microparticules de 25 à 50 µm constitue moins de 10%, de préférence moins de 5% et encore de préférence moins de 2% des microparticules d'un diamètre de 1 à 50 µm en suspension dans la boisson.

Selon un mode de réalisation, la boisson selon l'invention présente une teneur en matière sèche de 6 à 20% en poids, de préférence 7 à 16%, encore de préférence 8-15%, encore de préférence 8.5 à 12%.

Selon un mode de réalisation, la boisson selon l'invention présente une teneur en matière sèche de 7-14% en poids, de préférence de 8 à 12% encode de préférence de 8.5 à 11%.

Ces pourcentages sont de préférence la conséquence de l'enlèvement d'une partie de la matière sèche dans l'étape a), et/ou d'une diminution de la taille des microparticules ayant la taille indiquée. Ces pourcentages s'appliquent ainsi également à la boisson selon l'invention, après l'étape c), et donc aussi à la boisson finale selon l'invention.

L'homme du métier comprendra en particulier que la méthode de l'invention comporte l'élimination ou la destruction d'au moins une partie des microparticules et de préférence d'une partie majeure des microparticules qui sont associées au pic à droite dans la figure 3, entourant le pic à environ 33 µm.

La méthode de l'invention permet d'améliorer l'aspect visuel et la stabilité physicochimique (séparation de phases) de la boisson lorsque cette dernière est soumise à une pascalisation. D'autre part, la méthode de l'invention permet d'augmenter la durée de conservation de la boisson, probablement en raison de la diminution de la charge microbienne grâce à la pascalisation et/ou à la décantation. Dans le cadre de la présente spécification, "la durée de conservation" se réfère à un stockage à 4°C. De préférence, la durée de conservation est la durée pendant laquelle la boisson peut être consommée par un consommateur, à condition que le récipient contenant la boisson reste fermé pendant la durée de conservation. Il est généralement conseillé de consommer la boisson dans le 1 à 3 jours suivant l'ouverture. Dans un mode de réalisation, la durée de conservation correspond à la durée entre le remplissage du récipient et la date de conservation limite indiquée sur l'étiquette de la boisson. Il convient de noter que la boisson peut souvent être consommée au-delà de la date de consommation limite telle qu'indiquée sur la boisson.

Sans vouloir être lié par une théorie, le déposant envisage que, dans le cas d'un enlèvement de microparticules en suspension dans l'étape a), par exemple par décantation gravimétrique ou centrifuge, la charge microbienne de la boisson peut être réduite.

Dans un mode de réalisation, la durée de conservation est la durée suite au remplissage pendant laquelle le pH de la boisson reste supérieur à 4.6, de préférence supérieur à 5, encore de préférence supérieur à 5.5, et encore de préférence supérieur à 6.

De préférence, la boisson de l'invention présente une durée de vie de plus de 7 jours lorsqu'elle est stockée à 4°C. De préférence, la durée de vie est de deux à 14 jours ou plus, de préférence de 17 jours ou plus, encore de préférence de 21 jours ou plus.

De façon surprenante, la méthode de l'invention permet de diminuer l'ampleur d'une séparation de phases d'une boisson à base de souchet en raison d'un traitement par pascalisation.

Il est également surprenant qu'un traitement connu du domaine de la transformation du lait de vache, tel que l'homogénéisation, peut également contribuer à l'augmentation de la durée de vie et/ou de la stabilisation d'une boisson végétale à base de souchet. Ceci s'applique en particulier si le traitement est combiné de façon synergique avec la pascalisation et/ou encore l'étape de séparation (p. ex. par décantation et/ou centrifugation).

L'homme du métier ne rencontrera pas de difficulté particulière pour adapter le contenu de la présente divulgation à ses propres besoins.

### Exemples

Plusieurs expériences ont été conduites en utilisant une boisson préparée par l'extraction de noix de souchet à l'aide d'un extracteur industriel.

### Exemple 1: Impact de l'homogénéisation sur la couleur de la boisson

Dans une première expérience, l'effet de plusieurs régimes d'homogénéisation à un ou deux étages a été évalué. Les effets sur la couleur (dE^{∗}ab (DB65)) ainsi que les pressions appliquées lors de l'homogénéisation sont indiqués dans le Tableau 1 ci-après.

**Tableau 1: L'effet de l'homogénéisation sur la couleur de la boisson à base de souchet**

| Pression d'homogénéisation [bar] | dE^{∗}ab (D65)* |
|---|---|
| 200 (une étage) | 3.02 ± 0.03 |
| 200 / 25 (deux étages) | 4.65 ± 0.01 |
| 460 / 50 (deux étages) | 6.65 ± 0.02 |
| 1000 / 100 (deux étages) | 9.72 ± 0.03 |

| | |
|---|---|
| * Référence: produit non-traité | |

En raison de l'effet sur la couleur lorsque des pressions supérieures à environ 400 bar sont utilisées, la pression de 200 bar en un étage a été retenue pour les expériences suivantes.

### Exemple 2: Pascalisation, aspect optique et taille de particules suspendues

Plusieurs essais de pascalisation ont été conduits. La Figure 1 montre une bouteille contenant 340 mL de la boisson à base de souchet (non-traitée avant le remplissage) et soumis à une pascalisation de 6000 bars pendant 480 secondes. Comme on peut le voir, la pascalisation entraîne une séparation de la boisson en trois phases. On observe un crémage de la graisse (partie supérieure) ainsi qu'une sédimentation des particules les plus lourdes. Suite au traitement HPP, ces particules s'agglomèrent et deviennent un bloc solide. Ce résultat n'est pas acceptable en raison de l'effet de la pascalisation sur la stabilité physicochimique et/ou l'aspect visuel de la boisson.

La Figure 2 montre une bouteille contenant 340 mL de la boisson à base de souchet qui à été soumise à une décantation avant la pascalisation à l'aide d'un séparateur afin d'éliminer 1% de la matière sèche de la boisson, suivi d'une homogénéisation en un étage à 200 bars, avant de soumettre la bouteille au traitement par pascalisation (6000 bars, 480 secondes). Le produit présente un aspect visuel impeccable.

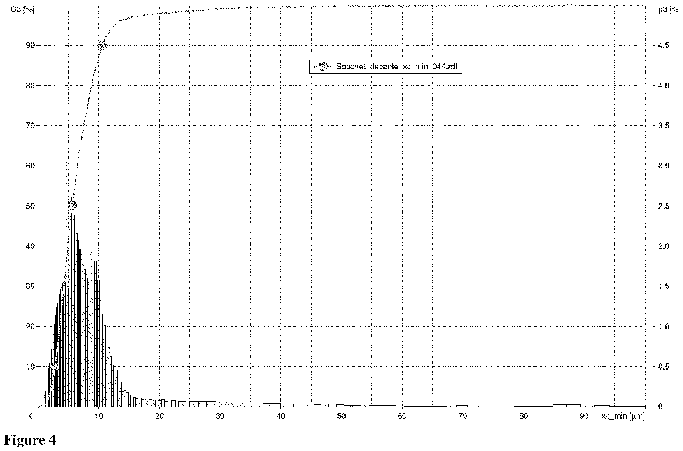

Les Figures 3 et 4 montrent respectivement les résultats de l'analyse de la taille des particules dans la boisson à base de souchet non-traitée et celle soumise à la décantation et l'homogénéisation comme décrit. Comme on peut le constater, en raison de la décantation séparation, les particules de diamètre entre 15 à 50 µm ont été éliminées.

### Exemple 3: L'Effet de la pascalisation sur l'inactivation microbienne

Plusieurs essais ont été conduits afin de déterminer l'effet du traitement par pascalisation sur l'inactivation microbienne. Les bouteilles remplies de la boisson ont été soumis à des traitements de 180 s, deux fois 180 s avec un relâchement complet de la pression entre des deux traitements, trois fois 180 s avec le relâchement de la pression, et un traitement de 6000 bar en continu pendant 480 secondes.

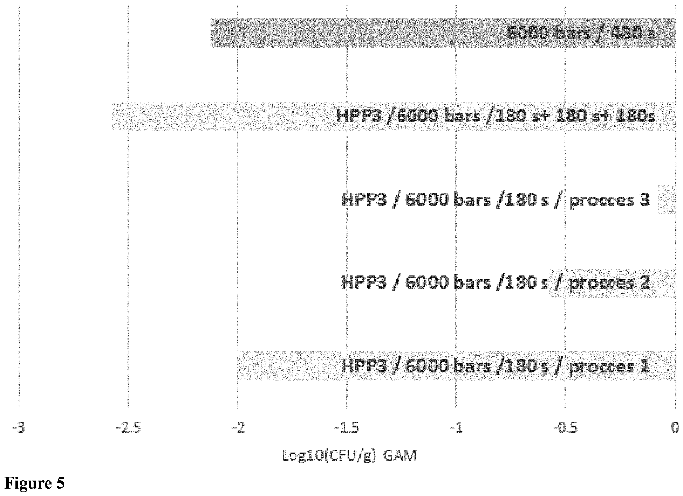

Dans le graphique de la Figure 5, la barre horizontale tout en bas indique une diminution de 2 log₁₀ des CFU/g (g de la boisson) suite au traitement de 6000 bars pendant 180 s.

La deuxième barre depuis le bas indique que le deuxième traitement de 6000 bars pendant 180 s apporte une diminution additionnelle d'un peu plus de 0.5 log₁₀ des CFU/g, et le troisième traitement n'apporte qu'une très petite diminution supplémentaire.

Comparé au traitement continu de 600 bars pendant 480 secondes, l'on obtient un meilleure résultat en appliquant deux traitements à 180 bars chacun (au total 360 secondes) avec le relâchement complet de la pression entre les traitements.

### Exemple 4: Evaluation de la stabilité de la boisson à base de souchet

Des échantillons de la boisson à base de souchet ont été soumis à continu à plaquesdes traitements divers. Dans un traitement, la boisson décantée et homogénéisée comme décrit dans l'Exemple 2 a été soumise à une pasteurisation en deux étapes, un premier traitement thermique de 72°C pendant 1 minute dans un pasteuriser continue à plaques , le remplissage de la boisson dans des bouteilles en verre de 340ml, et un deuxième traitement thermique extérieur des bouteilles remplies à 72°C pendant 10 minutes . Dans un autre traitement, la pasteurisation a été remplacée par une pascalisation de 6000 bars pendant 180s, ou encore de 6000 bar pendant 480 s.

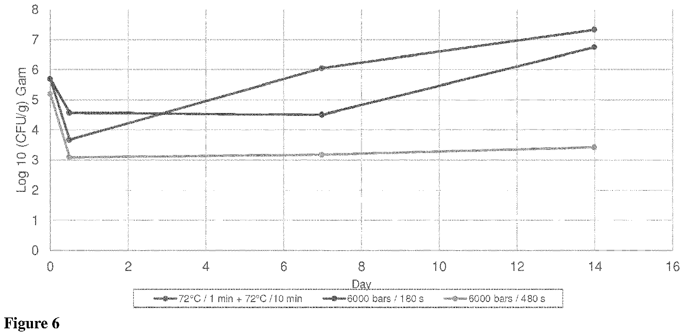

La charge microbienne a été évaluée pour la boisson décantée et homogénéisée avant le traitement, immédiatement après le traitement, 7 jours et 14 jours après le traitement. Les résultats sont montrés dans le graphique de la Figure 6. Comme on peut le voir, dans le cas du traitement par pascalisation (6000 bars, 480s), le niveau des CFU/g reste constant dans la boisson pendant la période d'observation. La boisson traitée par pascalisation à 6000 bar pendant 180s reste stable pendant 7 jours, mais ensuite les micro-organismes semblent croitre légèrement. La boisson pasteurisée thermiquement montre une bonne diminution des CFU/g au début, mais les microorganismes commencent à se multiplier rapidement après.

Les expériences conduites par l'inventeur permettent de conclure qu'une boisson ayant un aspect optique naturel et qui reste stable pendant au moins 14 jours à 4°C peut être obtenue grâce à la séparation de microparticules de taille définie suivi par la pascalisation. L'homogénéisation permet de réduire la taille des globules gras et d'éviter le phénomène de crémage. Il convient de noter que ces résultats sont obtenus sans l'ajout d'un conservateur, stabilisateur ou colorant. La boisson traitée selon l'invention reste un aliment naturel.

## Revendications

1. Une méthode pour augmenter la stabilité et/ou la durée de conservation d'une boisson à base de souchet, comportant :
a) le traitement de la boisson de façon qu'au moins une partie des microparticules en suspension dans la boisson disparaît,
b) le remplissage de la boisson obtenue à l'étape a) dans des récipients, et,
c) le traitement des récipients remplis par une pascalisation.

2. La méthode selon la revendication 1, dans laquelle, dans l'étape a), une partie de la matière sèche en suspension dans la boisson est enlevée.

3. La méthode selon l'une quelconque des revendications précédentes, dans laquelle dans l'étape a), au moins une partie des microparticules d'une taille inférieure à 70 µm, de préférence inférieur à 60 µm, encore de préférence inférieur à 50 µm, et encore de préférence inférieur à 45 µm est enlevée et/ou autrement éliminée.

4. La méthode selon l'une quelconque des revendications précédentes, dans laquelle dans l'étape a), au moins une partie des microparticules d'une taille entre 10-100 µm, de préférence entre 15-70 µm, de préférence entre 20-60 µm et encore de préférence d'une taille entre 25-50 µm est enlevée et/ou autrement éliminée.

5. La méthode selon l'une quelconque des revendications précédentes, dans laquelle l'étape a) comprend une filtration et/ou une séparation à l'aide d'un séparateur, d'un décanteur et/ou d'une centrifugeuse.

6. La méthode selon l'une quelconque des revendications précédentes, dans laquelle dans l'étape a) 1 à 25% en poids de la matière sèche de la boisson est enlevée, de préférence 2 à 20%, de préférence 3 à 18% encore de préférence 5 à 15%.

7. La méthode selon l'une quelconque des revendications précédentes, comportant en outre l'homogénéisation de la boisson, de préférence avant le remplissage, encore de préférence avant l'étape b) et après l'étape a).

8. La méthode selon l'une quelconque des revendications précédentes, **caractérisée en ce que**, dans l'étape c) les récipients sont exposés à une pression comprise entre 460 et 810 MPa (4800 à 8010 bar), de préférence entre 490 et 710 MPa, encore de préférence entre 540 et 690 MPa, et encore de préférence entre 570 et 650 MPa.

9. La méthode selon la revendication 8, dans laquelle le récipient est exposé aux pressions des fourchettes indiquées pendant une durée de préférence de plus de 180 s, encore de préférence de 200s ou plus, encore de préférence de 250s ou plus.

10. La méthode selon l'une quelconque des revendications précédentes, **caractérisée en ce que** la boisson est acidifiée avant l'étape b), de préférence après l'étape a), et le cas échéant, de préférence après l'homogénéisation.

11. Une méthode pour la préparation d'une boisson à base de souchet, comportant:
i. le broyage de noix de souchets en présence d'eau et la récupération de l'eau dans laquelle des composants des noix de souchet broyées sont dissouts et/ou en suspension, afin d'obtenir ladite boisson à base de souchet, et,
ii. le traitement de la boisson selon les étapes a) à c) d'une quelconque des revendications de 1 à 10.

12. Une boisson à base de souchet, **caractérisée en ce qu'**elle peut être obtenue par la méthode selon l'une quelconque des revendications de 1 à 11.

13. Une boisson à base de souchet, **caractérisée en ce que** les microparticules de 20 à 60µm constituent moins de 40% en volume de la matière solide en suspension dans la boisson, de préférence moins de 30%, encore de préférence moins de 20%, encore de préférence moins de 15%.

14. La boisson à base de souchet selon la revendication 12 et/ou 13, **caractérisée en ce qu'**elle présente une teneur en matière sèche de 7 à 14% en poids, de préférence 8 à 12%, encore de préférence 8.5-11%.
